# DEMANDE DE BREVET EUROPEEN

(11) **EP 0 966 088 A1**
(43) Date de publication de la demande: **22.12.1999**
(21) Numéro de dépôt: 99201832.5
(22) Date de dépôt: 09.06.1999
(51) Int. Cl.: H02J 7/00

(54) **Appareil radioélectrique comportant un dispositif d'alimentation.**

(30) Priorité: 16.06.1998 FR 9807587
(71) Demandeur: Koninklijke Philips Electronics N.V., 5621 BA Eindhoven (NL)
(72) Inventeur: Nollet, Michel, Société Civile S.P.I.D., 75008 Paris (FR); Babin, Laurence, Société Civile S.P.I.D., 75008 Paris (FR); Herrouin, Didier, Société Civile S.P.I.D., 75008 Paris (FR)
(74) Mandataire: Chaffraix, Jean

(57) **Abrégé**

Cet appareil comporte un dispositif d'alimentation formé par :
- un circuit à alimenter (25) situé dans un premier emplacement (E1),
- une source d'énergie (20, 22) munie d'une commande (23) pour régulation située dans un deuxième emplacement (E2),
- une liaison (19) pour relier lesdits emplacements et pour transmettre de l'énergie,
- un circuit de mesure (32) pour fournir un signal d'erreur à ladite commande de régulation, en évaluant une grandeur électrique concernant ledit circuit à alimenter.

Pour éviter de fausses mesures, ce circuit de mesure (32) est situé dans le premier emplacement.

Application : charge d'accumulateur de lithium-ion

## Description

La présente invention concerne un appareil comportant un dispositif d'alimentation formé par:
- un circuit à alimenter situé dans un premier emplacement,
- une source d'énergie munie d'une commande pour régulation située dans un deuxième emplacement,
- une liaison pour relier lesdits emplacements et pour transmettre de l'énergie,
- un circuit de mesure pour fournir un signal d'erreur à ladite commande de régulation, en évaluant une grandeur électrique concernant ledit circuit à alimenter.

L'invention concerne aussi un système d'alimentation convenant à un tel appareil.

De tels appareils sont bien connus et trouvent de nombreuses applications, notamment dans le domaine des appareils de téléphonie portables pour lesquels le circuit à alimenter est constitué par un accumulateur situé dans le boîtier formant combiné. Cet accumulateur doit être rechargé par une source d'énergie constituée, elle, par un circuit de charge connecté au secteur.

Un problème qui se pose avec de tels appareils, est que la tension de charge de l'accumulateur soit bien adaptée à l'accumulateur. Notamment, pour les accumulateurs au lithium ion cette tension doit être de 4,1 V à 1% près. Si la tension de charge est en dessous de cette valeur, l'accumulateur n'est jamais bien chargé et, si la tension est trop élevée, on encourt le risque d'une détérioration de celui-ci, voire d'une explosion.

La présente invention propose un appareil du genre mentionné dans le préambule dans lequel on a prévu des moyens pour être maître de la tension de charge à appliquer à l'accumulateur, qui n'est faussée ni par la longueur des fils, ni par la qualité des contacts prévus pour le raccord de la ligne au niveau des emplacements.

Pour cela, un tel appareil est remarquable en ce que :
- le circuit de mesure est situé dans le premier emplacement.

L'idée de l'invention repose sur le fait que la transmission de la valeur du signal d'erreur s'effectue d'une façon bien plus sûre que l'application d'une tension de charge dont la valeur est bien trop dépendante des contacts des raccords de la liaison au niveau des emplacements, ces contacts plus ou moins bons entraînent des pertes ohmiques plus ou moins importantes en fonction du courant qui circule dans la liaison.

La description suivante, faite en regard des dessins ci-annexés, le tout donné à titre d'exemple non limitatif, fera bien comprendre comment l'invention peut être réalisée.
La figure 1 montre un appareil conforme à l'invention.
La figure 2 montre un schéma global de réalisation de l'invention.
La figure 3 est un mode de réalisation détaillé du circuit de régulation.
La figure 4 est le gabarit de commande que respecte l'appareil de l'invention.

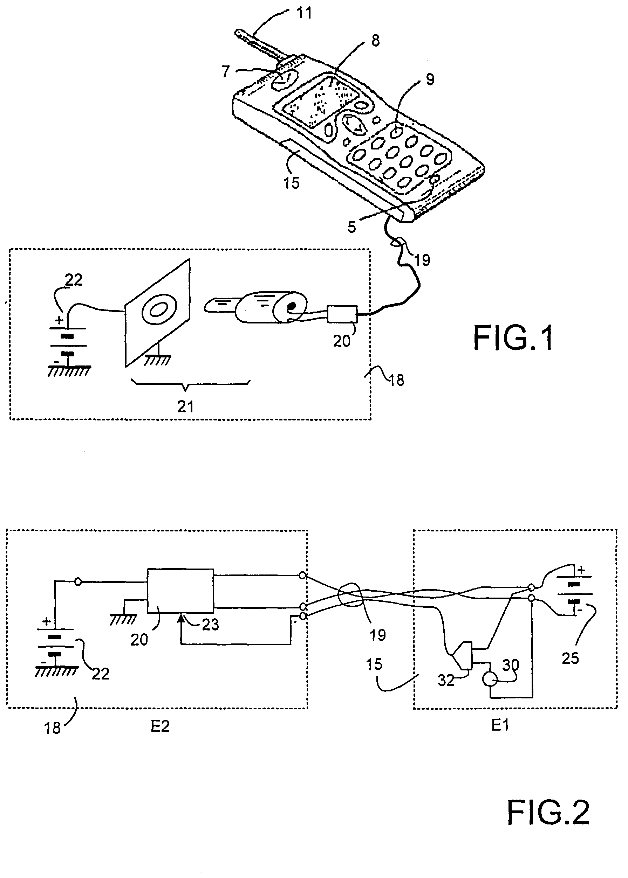

A la figure 1, on a représenté un appareil électronique conforme à l'invention. Dans le cadre de l'exemple décrit, c'est un appareil radio téléphonique portable du genre que l'on utilise dans les systèmes cellulaires. Il est composé d'un microphone 5, d'un écouteur 7, d'un écran 8, d'un clavier 9 et d'une antenne 11. Pour pouvoir fonctionner, cet appareil utilise un bloc d'accumulateur 15. Ce bloc 15 peut être rechargé à partir d'une source d'énergie 18 reliée à ce bloc d'accumulateur 15 par une liaison 19. Cette source d'énergie est constituée par un circuit de régulation 20 couplé via une prise 21 à un accumulateur de voiture 22.

La figure 2 montre le schéma global de réalisation conforme à l'invention. Selon ce schéma, l'accumulateur proprement dit 25, faisant partie du bloc 15, est disposé en un premier emplacement E1, dans le cadre de l'exemple décrit, dans l'appareil électronique. La source d'alimentation 18 est située dans un deuxième emplacement E2, vers la prise 21. Le circuit de régulation 20 est prévu pour modifier la tension fournie par l'accumulateur 22 de façon à l'adapter à la charge de l'accumulateur 25. A cet effet il est muni d'une commande de régulation 23.

Selon l'invention, pour charger l'accumulateur 25, la tension à ses bornes est mesurée et est comparée à une première tension de consigne fournie par une source de tension de référence 30 au moyen d'un circuit de mesure 32. Le signal d'erreur Verr représentant le résultat de cette comparaison est transmis vers la commande 23.

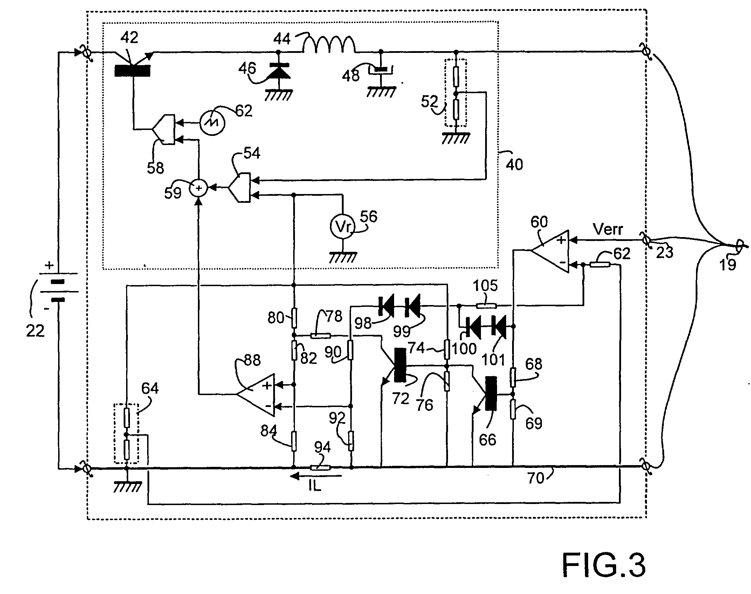

La figure 3 montre en détail ce circuit de régulation. Il est formé autour d'un circuit de découpage de tension 40. Ce circuit 40 comprend un transistor 42 se comportant en interrupteur qui découpe la tension fournie par l'accumulateur 22. La tension ainsi hachée est appliquée à une self inductance 44 qui emmagasine une certaine quantité de courant pendant le temps que le transistor 42 est passant et la restitue à la charge en transitant par une diode 46 pendant le temps durant lequel ce dernier est non-passant. Un condensateur 48 atténue les transitoires de commutation. Un diviseur potentiométrique 52 prélève une partie de la tension de sortie pour l'appliquer à un comparateur 54 qui compare la partie ainsi prélevée à une tension de référence fournie par une source de tension de référence 56. Le signal donnant le résultat de cette dernière comparaison est appliqué à une première entrée d'un autre comparateur 58, par l'intermédiaire d'un additionneur de tension 59. A l'autre entrée du comparateur 58 est appliqué une tension en dents de scie fournie par un générateur de tension en dents de scie 62. C'est le signal élaboré par ce comparateur 58 qui va déterminer l'état passant ou non-passant du transistor 42. Ainsi plus la tension appliquée à ladite première entrée est élevée, plus les temps de conduction du transistor seront réduits de façon à abaisser la tension de sortie du circuit 40. Une description d'un tel circuit est donnée par les spécifications concernant le circuit immatriculé L4971 fabriqué par la société Thomson-SGS.

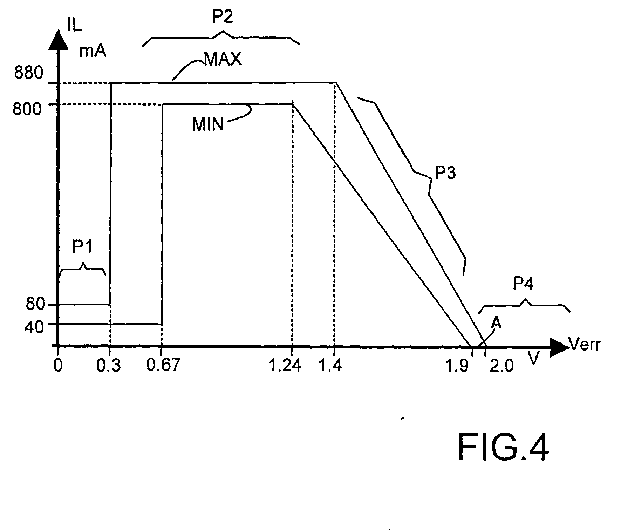

Afin de respecter les besoins de toutes les batteries (courant ou précharge) on s'est aperçu que la commande de la charge devait respecter un certain gabarit qui est montré à la figure 4. En abscisse, on a porté la tension Verr qui est fonction de la tension aux bornes de l'accumulateur 25. En ordonnée, on a porté le courant de charge IL de cet accumulateur 25 qui est fonction de Verr. Sur cette figure, le point A indique un état de charge maximum de l'accumulateur, ce qui correspond à une tension Verr de 2 Volts et un courant IL nul. Il est en effet important de souligner, qu'il ne faut pas surcharger un accumulateur à cause des risques d'explosion. Les valeurs que propose ce gabarit sont comprises entre les deux courbes MAX et MIN de façon à tenir compte des tolérances des composants des circuits électroniques. Ce gabarit comporte plusieurs parties :

La partie P1 est une précharge et concerne un accumulateur 25 particulièrement déchargé.

Afin de faire passer le chargeur en mode charge rapide, on fournit une tension Verr comprise entre 0,67 V et 1,24 V, dès que la tension de la batterie dépasse une valeur (par exemple 3 V) au-delà de laquelle elle peut supporter sans dommage le courant de charge rapide.

Cette élévation de la tension Verr peut être obtenue au moyen d'un comparateur qui n'est pas le comparateur 32, mais qui peut être situé au niveau de la batterie ou dans le téléphone qu'elle alimente (ou même ailleurs). En alternative, cette élévation de la tension "Verr" peut être obtenue au moyen d'un convertisseur analogique-numérique lu par un microcontrôleur contenu dans le téléphone, ce microcontrôleur produisant ensuite sur une de ses sorties la tension logique nécessaire pour commander l'élévation de la tension Verr.

L'exploitation de cette élévation de la tension Verr pour passer du courant de précharge au courant de post charge, est faite par une partie du circuit de la figure 3. C'est le premier rôle de l'amplificateur opérationnel 60 qui, tant que les diodes 100 et 101 sont bloquées, a un gain très grand et fonctionne donc en comparateur. Il compare la tension "Verr" qui arrive sur son entrée + à la tension produite par un diviseur potentiométrique 64, qui arrive sur son entrée négative par l'intermédiaire de la résistance 62.

Lorsque Verr dépasse la tension produite par le pont diviseur 64 (environ 0,5 V), la sortie de 60 devient positive, ce qui met en conduction le transistor 66 et bloque donc le transistor 72 qui, alors, déconnecte la résistance 78. Ceci augmente donc la valeur de la tension appliquée par le pont diviseur 80-82-84 à l'amplificateur opérationnel 88 (entrée +) et il en résulte l'augmentation du courant de sortie recherchée, puisque la tension produite par ce courant dans la résistance 94 est comparée par l'amplificateur opérationnel 88 à la tension produite par le pont diviseur 80-82-84. Le résultat de cette comparaison (sortie de l'amplificateur opérationnel 88) est envoyé au comparateur 58 via le "OU" analogique 59. Le comparateur 58 compare la sortie de l'amplificateur opérationnel 88 à la tension produite par le générateur de dents de scie 52 : il en résulte un temps de conduction du transistor 42.

La partie P2 est une charge à courant constant tant que Verr est inférieur à une tension de l'ordre de 1,3 Volt.

La partie P3 suit une partie linéaire et correspond à un courant de charge qui décroît linéairement avec la tension Verr.

Le passage de la partie P2 à la partie P3 se fait lui aussi par franchissement d'un seuil de tension analogique.

L'élévation de la tension "Verr", qui permet le franchissement de ce seuil, est produite par le comparateur 32 dès qu'il constate que la tension de la batterie atteint sa valeur de consigne (par exemple 4,1 V). A partir de ce moment, au fur et à mesure que la batterie Li Ion continue de se charger, elle a besoin de moins en moins de courant et le comparateur 32 continue donc de faire monter peu à peu "Verr" à l'intérieur de la partie P3, ce qui fait diminuer progressivement le courant de charge tout en maintenant constante la tension de la batterie (par exemple 4,1 V).

Un circuit est donc dédié à la réalisation de la fonction linéaire IL inversement proportionnelle à Verr, pour Verr compris entre 1,2 V et 2 V.

Sur le schéma de la figure 3 (d'autres réalisations étant possibles) le seuil de 1,2 V est obtenu au moyen de diodes au silicium 98 et 99, et avec une résistance 105 dont la valeur R est: R = 0Ω. On peut diminuer la valeur de ce seuil en faisant R#0, ou l'augmenter en ajoutant une troisième diode en série avec les diodes 98 et 99.

Si la tolérance obtenue sur la valeur de ce seuil est jugée insuffisante, on peut remplacer les diodes 98 et 99 par une référence de tension précise du type TL431 (dans ce cas, la valeur de la tension de référence étant 2,5 V, on pourra ramener le seuil à la valeur désirée 1,2 V ou 1,4 V en augmentant la valeur de la résistance 105).

Sur le schéma de la figure 3 (d'autres réalisations étant possibles) le gain d'environ -1 A/V (qui permet de passer de 0,8 A à 0 A pour Verr passant de 1,2 V à 2 V) est obtenu (si R 105 = 0) au moyen du pont diviseur R90 - R92. Si R 105 # 0, le gain est fonction de R90 et R92, mais aussi de R105 et R62

### Version simplifiée

Il est à noter que dans le schéma de la figure 3, le circuit comprenant les transistors 72 et 66, ainsi que l'amplificateur opérationnel 60, et leurs résistances d'accompagnement a pour but, en fin de compte, de créer la zone de précharge P1.

Une version simplifiée, mais conforme à l'invention, ne comporterait pas les composants précités et Verr attaquerait directement le "OU" à diodes 59 (avec seulement, éventuellement, l'adjonction d'un pont diviseur pour adapter le gain, ou d'une diode pour créer un seuil).

### Version secteur

Le schéma d'alimentation commandable de la figure 3 n'est qu'un exemple, bien d'autres schémas sont envisageables. Pour passer à une version secteur, notamment, outre l'isolation à introduire dans la voie puissance au moyen d'un transformateur, on peut introduire un photocoupleur entre le "OU" à diodes 59 et le comparateur 58.

La partie P4 correspond à un arrêt du courant de charge dès que Verr s'approche de 2 Volts.

Le circuit montré à la figure 3 comporte les moyens pour respecter ce gabarit. Un amplificateur opérationnel 60 est muni d'une entrée (-) et d'une entrée (+). L'entrée (+) reçoit la tension Verr transmise par la ligne 19 et l'entrée (-) une tension de seuil, par l'intermédiaire d'une résistance 62 provenant d'un diviseur potentiométrique 64 alimenté par la source de tension de référence 56. Au moyen de ce diviseur potentiométrique 64, on obtient une tension de seuil de 0,3 Volt. Ainsi, tant que la tension Verr est inférieure à cette valeur, la tension de sortie de l'amplificateur 60 est nulle bloquant ainsi un transistor 66 dont la base est alimentée par la sortie de cet amplificateur 60 par l'intermédiaire d'une résistance 68. La base de ce transistor 66 est reliée, par l'intermédiaire d'une résistance 69, à une ligne 70 qui est la ligne de retour de la charge de l'accumulateur 25. Comme le transistor 66 est bloqué, un transistor 72 est rendu conducteur. Sa base reçoit alors une tension établie au point médian d'un montage en série de deux résistances 74 et 76 qui est relié entre une extrémité de la source de référence 56 et la ligne 70. Le transistor 72, rendu conducteur connecte sur la ligne 70 une extrémité d'une résistance 78. L'autre extrémité de cette résistance 78 est relié au point commun des extrémités de deux résistances 80 et 82. L'autre extrémité de la résistance 80 est reliée à la source de tension de référence 56 et l'autre extrémité de la résistance 82 à l'extrémité d'une résistance 84. L'autre extrémité de cette résistance 84 est reliée à la borne négative de l'accumulateur de la voiture 22. Lorsque la résistance 78 est connectée à la ligne 70 (par le transistor 72), une tension de valeur faible est appliquée à l'entrée (+) d'un amplificateur opérationnel 88. L'entrée (-) de cet amplificateur 88 est reliée au point commun de deux résistances 90 et 92 montées en série avec un dispositif à seuil formé des diodes 98, 99, 100 et 101 connecté à la sortie de l'amplificateur 60. Ces diodes ne deviennent conductrices que lorsque la tension à la sortie de l'amplificateur 60 excède ce seuil. En jouant sur la valeur d'une résistance 105, connectée entre l'entrée (-) et le point commun des diodes 100 et 99, le dispositif à seuil devient conducteur pour une tension Verr ≈ 1,2 Volt. La tension à l'entrée de l'amplificateur 88 est donnée par la somme de la tension aux extrémités de la résistance 92 qui reflète la tension Verr et de la tension aux extrémités de la résistance 94 qui reflète, elle, le courant de charge de l'accumulateur 25. La tableau ci-dessous résume le fonctionnement :

| Partie du gabarit | Transistor 72 | Résistance 94 | 98,99,100,101 | Sortie (88) |
|---|---|---|---|---|
| P1 | Passant | Sans effet | Bloquées | Verr |
| P2 | Bloqué | Fournit ≈ 0.3 V | Bloquées | Verr |
| P3 | Bloqué | Fournit ≈ RxIL | Passantes | 0 |
| P4 | Bloqué | Fournit ≈ 0 V | Passantes | 0 |

Bien que l'on ait décrit un mode de réalisation utilisant un accumulateur de voiture, d'autres sources d'énergie (secteur, par exemple) rentrent aussi dans le cadre de l'invention.

## Revendications

1. Appareil comportant un dispositif d'alimentation formé par:
- un circuit à alimenter situé dans un premier emplacement,
- une source d'énergie munie d'une commande pour régulation située dans un deuxième emplacement,
- une liaison pour relier lesdits emplacements et pour transmettre de l'énergie,
- un circuit de mesure pour fournir un signal d'erreur à ladite commande de régulation, en évaluant une grandeur électrique concernant ledit circuit à alimenter, caractérisé en ce que :
- le circuit de mesure est situé dans le premier emplacement.

2. Appareil selon la revendication 1 caractérisé en ce que, dans ladite liaison, il est prévu des moyens pour transmettre ledit signal d'erreur.

3. Appareil selon la revendication 1 ou 2 caractérisé en ce que le circuit à alimenter est un accumulateur.

4. Appareil selon la revendication 3 caractérisé en ce qu'il comporte des moyens pour assurer une charge de l'accumulateur selon un certain gabarit.

5. Appareil selon la revendication 4 caractérisé en que ces moyens comportent des dispositifs à seuil pour déterminer les différentes parties de ce gabarit.

6. Système d'alimentation convenant à un appareil selon l'une des revendications 1 à 5 caractérisé en ce qu'il comporte :
- un circuit à alimenter situé dans un premier emplacement,
- une source d'énergie munie d'une commande pour régulation située dans un deuxième emplacement,
- une liaison pour relier lesdits emplacements et pour transmettre de l'énergie,
- un circuit de mesure, situé dans ledit premier emplacement, pour fournir un signal d'erreur à ladite commande de régulation, en évaluant une grandeur électrique concernant ledit circuit à alimenter.
